# EUROPÄISCHE PATENTANMELDUNG

(11) **EP 3 608 130 A1**
(43) Veröffentlichungstag der Anmeldung: **12.02.2020**
(21) Anmeldenummer: 19189543.2
(22) Anmeldetag: 01.08.2019
(51) Int. Cl.: B60C 25/18

(54) **WERKZEUG ZUR MONTAGE EINES SNAP-IN VENTILS AN EINER FELGE**

(30) Priorität: 10.08.2018 DE 102018119507
(71) Anmelder: HUF BAOLONG ELECTRONICS BRETTEN GMBH, 75015 Bretten (DE)
(72) Erfinder: Seifert, Andre, Pforzheim (DE)
(74) Vertreter: Twelmeier Mommer & Partner

(57) **Zusammenfassung**

Beschrieben wird ein Werkzeug zur Montage eines Snap-in Ventils (2) an einer Felge (1), mit einem Kopplungsteil (6), um ein Snap-in Ventil (2) zu fassen, und einem Mechanismus (9), um ein von dem Kopplungsteil (6) gefasstes Snap-in Ventil (2) soweit in eine Ventilbohrung hineinzuziehen, dass ein Rand der Ventilbohrung in eine dafür vorgesehene Nut des Snap-in Ventils (2) schnappt, Erfindungsgemäß ist vorgesehen, dass ein Stützrohr (5) zum Einstecken in eine Ventilbohrung das Kopplungsteil (5) umgibt, wobei das Kopplungsteil (5) in Längsrichtung des Stützrohrs (5) relativ zu diesem beweglich ist.

## Beschreibung

Die Erfindung geht aus von einem Werkzeug zur Montage eines Snap-in Ventils an einer Felge. Werkzeuge gemäß dem Oberbegriff des Anspruchs 1 sind von verschiedenen Herstellern bekannt und werden in der Regel als Ventileinziehhebel bezeichnet.

Als Alternative zu Ventilen, die fest mit der Reifenfelge verschraubt werden, sind flexibel angebundene oder sogenannte "Snap-In" Ventile gebräuchlich geworden. Diese Ventile, die am Ventilfuß mit einem flexiblen Material, z.B. Gummi, ummantelt sind, zeichnen sich durch eine einfache Montage aus, indem sie nur durch eine entsprechende Ventilbohrung der Fahrzeugreifenfelge gezogen werden. Der Rand des Ventilbohrung rastet bzw. schnappt (snap-in) dann in eine Nut des elastischen Mantels, z.B. aus Gummi, des Ventilfußes ein. Das Snap-in Ventil wird dann durch den elastischen Mantel des Ventils mechanisch in der Ventilbohrung gehalten.

Um Snap-in Ventile an einer Felge zu montieren, sind Werkzeuge bekannt, die ein in die Ventilbohrung hineinragendes Ventil fassen und dann durch Zug soweit in die Ventilbohrung ziehen, bis der Rand der Ventilbohrung in die dafür vorgesehene Nut des Snap-in Ventils einschnappt. Um eine entsprechende Zugkraft zu erzeugen, ist an einem Kopplungsteil, welches das Snap-in Ventil fasst, ein Hebel schwenkbar befestigt. Wenn sich dieser Hebel an der Felge abstützt, kann dann durch Betätigen des Hebels das Ventil über das Kopplungsteil in die Ventilbohrung gezogen werden.

Bei der Verwendung eines solchen Werkzeugs muss auf dessen korrekte Positionierung relativ zur Felge geachtet werden, damit die erzeugte Zugkraft in Längsrichtung der Ventilbohrung wirkt. Wenn das Werkzeug nicht richtig angesetzt wird, wird das Ventil schräg in die Ventilbohrung gezogen, was zu Beschädigungen führen kann, insbesondere wenn das Snap-in Ventil eine Reifendrucküberwachungseinheit trägt, wie z.B. in der DE 10 2005 063 384 A1 beschrieben.

Aufgabe der vorliegenden Erfindung ist, ein einfach zu handhabendes Werkzeug zu schaffen, mit dem die Gefahr einer Beschädigung eines Snap-in Ventils bei der Montage an einer Felge reduziert ist.

Diese Aufgabe wird durch ein Werkzeug mit den im Anspruch 1 angegebenen Merkmalen gelöst. Vorteilhafte Weiterbildungen der Erfindung sind Gegenstand von Unteransprüchen.

Ein erfindungsgemäßes Werkzeug enthält ein Stützrohr, welches das Kopplungsteil umgibt. Das Kopplungsteil ist relativ zu dem Stützrohr in Längsrichtung des Stützrohrs beweglich. Das Stützrohr sorgt zuverlässig für eine lineare Ausrichtung des Snap-in Ventils und der von dem Werkzeug zur Montage des Snap-in Ventils ausgeübten Zugbewegung in Längsrichtung der Ventilbohrung. Die Gefahr einer Beschädigung des Snap-in Ventils bei der Montage ist somit deutlich reduziert.

Das Stützrohr kann sich außerhalb der Ventilbohrung an der Felge abstützen, beispielsweise an einer ebenen Ringfläche, die bei manchen Felgen die Ventilbohrung umgibt. Bei anderen Ausführungsformen der Erfindung ist das Stützrohr dafür ausgelegt, in die Ventilbohrung gesteckt zu werden und sich dann in der Ventilbohrung abzustützen. Eine Ventilbohrung für ein Snap-in Ventil verengt sich an ihrem inneren Ende, damit die Felge bzw. der Rand der Ventilbohrung dort mit einem Snap-in Ventil verrasten kann. Das Stützrohr ist bevorzugt dafür ausgelegt, in eine Ventilbohrung gesteckt zu werden und sich in der Ventilbohrung auf einer durch die Durchmesserverengung gebildeten Ringschulter abzustützen.

Der Mechanismus, um ein von dem Kopplungsteil gefasstes Snap-in Ventil soweit in eine Ventilbohrung hineinzuziehen, dass ein Rand der Ventilbohrung in eine dafür vorgesehene Nut des Snap-in Ventils schnappt, kann beispielsweise ein Schwenkhebel sein. Weitere Möglichkeiten sind ein pneumatische Antrieb oder ein Elektromotor.

Eine vorteilhafte Weiterbildung der Erfindung sieht vor, dass das Stützrohr an seinem von dem Mechanismus abgewandten Ende eine Stützfläche aufweist, die dafür vorgesehen ist, sich an der Felge abzustützen. Alternativ oder zusätzlich kann eine Stützfläche kann aber auch in einem Abstand von beiden Enden des Stützrohrs vorgesehen sein, etwa zum Abstützen des Stützrohrs an der Felge außerhalb der Ventilbohrung.

Das Kopplungsteil kann das Ventil beispielsweise fassen, indem es mit dem Ventil verschraubt wird. Snap-in Ventile haben an ihrem aus der Felge nach außen herausragenden Ende ein Gewinde, auf das in der Regel eine Schutzkappe aufgeschraubt ist. Dieses Gewinde kann dazu genutzt werden, das Kopplungsteil mit dem Snap-in Ventil zu verschrauben. Eine andere Möglichkeit besteht darin, dass das Kopplungsteil das Ventil an der Schutzkappe greift. Beispielsweise kann das Kopplungsteil einen Greifer aufweisen, der unter den unteren (d.h. zur Innenseite der Felge gerichteten) Rand greift.

Eine vorteilhafte Weiterbildung der Erfindung sieht vor, dass der Mechanismus von einer Steuerungseinheit gesteuert wird, die nach mehreren Millimetern Bewegungsweg des Kopplungsteils die auf das Kopplungsteil ausgeübte Zugkraft erhöht, sodass das Ventil in einer Endphase seiner Einzugsbewegung in die Ventilbohrung mit einer erhöhten Kraft gezogen wird, beispielsweise mit einer wenigstens um das Zehnfache erhöhten Kraft oder Geschwindigkeit. Auf diese Weise kann das Risiko einer Verletzung bei der Montage des Felgenventils deutlich reduziert werden, insbesondere wenn ein pneumatischer oder elektrischer Antriebsmechanismus verwendet wird. Bei der Montage eines Snap-in Ventils wird dieses zunächst von Hand in die Ventilbohrung gesteckt und dort gehalten, bis das Snap-in Ventil von dem Kopplungsteil des Werkzeugs gefasst wird. Wenn man dann das Snap-in Ventil nicht schnell genug loslässt, besteht die Gefahr, dass man sich Finger zwischen dem Ventil oder einer an dem Ventil befestigter Reifendrucküberwachungseinheit und der Felge einklemmt. Eine langsame Bewegung zu Beginn der Montage gibt einem Benutzer genug Zeit, das Ventil loszulassen bevor in einer zweiten Phase der Einzugsbewegung die Zugkraft erhöht wird, um das Einschnappen des Snap-in Ventils zu bewirken.

Weitere Einzelheiten und Vorteile der Erfindung werden an einem Ausführungsbeispiel unter Bezugnahme auf die beigefügten Zeichnungen erläutert. Es zeigen:

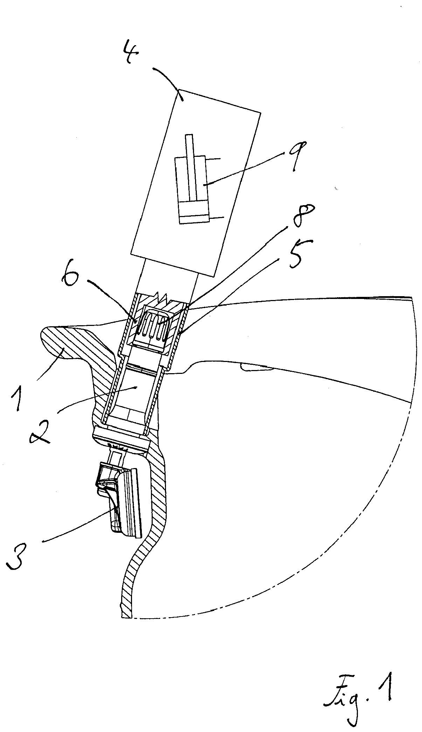

- Fig. 1: eine schematische Darstellung eines Werkzeugs zur Montage eines Snapin Ventils an einer Felge.

In Figur 1 ist eine Felge 1 zusammen mit einem Snap-in Ventil 2, das eine Reifendrucküberwachungseinheit 3 trägt, und einem Montagewerkzeug 4 in einer teilweise geschnittenen Ansicht dargestellt. Das Snap-in Ventil 2 steckt in einer Ventilbohrung der Felge 1. Die Ventilbohrung ist bei dem dargestellten Ausführungsbeispiel eine Stufenbohrung. Im montierten Zustand greift ein Rand der Ventilbohrung in eine Ringnut des Snap-in Ventils 2 ein. Diese Ringnut befindet sich in einem Körper des Snap-in Ventils 2, der aus Kunststoff oder Gummi ist.

Bei der Montage wird das Snap-in Ventil 2 zunächst von der Felgeninnenseite aus in die Ventilbohrung gesteckt und dann mit dem Werkzeug 4 nach außen gezogen. Das Werkzeug 4 hat ein Stützrohr 5, das von außen in die Ventilbohrung gesteckt wird, ein Kopplungsteil 6, welches das Snap-in Ventil 2 in der Ventilbohrung fasst, sowie einen Mechanismus 9, um das Kopplungsteil 6 in Längsrichtung des Stützrohrs 5 zu bewegen und dadurch das von dem Kopplungsteil 6 gefasste Snap-in Ventil 2 nach außen zu ziehen, so dass der Rand der Ventilbohrung in die Ringnut des Snap-in Ventils 2 einschnappen kann.

Wie Figur 1 zeigt, stützt sich bei der Montage das Stützrohr 5 an der Felge 1 ab. Bei dem gezeigten Ausführungsbeispiel ist die Ventilbohrung eine Stufenbohrung und das Stützrohr 5 stützt sich auf einer Kreisringfläche am Übergang vom größeren zum kleineren Durchmesser ab. Das Stützrohr 5 kann einen schmalen, vorderen Abschnitt zum Einführen in die Ventilbohrung und einen breiteren, hinteren Abschnitt, der auch bei Gebrauch des Werkzeugs außerhalb der Ventilbohrung ist, haben. Mit anderen Worten hat das Stützrohr 5 dann einen unteren Teil, der bei Gebrauch des Werkzeugs 4 in der Ventilbohrung ist, und einen oberen Teil, der bei Gebrauch des Werkzeugs 4 außerhalb der Ventilbohrung ist, wobei das Stützrohr 5 in dem oberen Teil einen größeren Außendurchmesser und einen größeren Innendurchmesser als in dem unteren Teil aufweist. Auf diese Weise kann in dem hinteren oder oberen Abschnitt des Stützrohrs 5 problemlos Platz für das Kopplungsteil 6 geschaffen werden.

Das Kopplungsteil 6 kann auf unterschiedliche Weise ausgebildet sein, um das Snap-in Ventil 2 zu fassen. Das Kopplungsteil 6 kann beispielsweise dazu vorgesehen sein, mit dem Snap-in Ventil 2 verschraubt zu werden. Bei dem dargestellten Ausführungsbeispiel fasst das Kopplungsteil 6 das Snap-in Ventil 2, indem es eine Schutzkappe 8 des Snap-in Ventils 2 greift.

Wenn das Kopplungsteil 6 das Snap-in Ventil 2 in der Ventilbohrung 2 gefasst hat, wird mit dem Mechanismus 9 Zug auf das Kopplungsteil 6 ausgeübt und dieses dadurch in Längsrichtung des Stützrohrs 5 bewegt. Dadurch wird das Snap-in Ventil 2 weiter in die Ventilbohrung hineingezogen, bis der Rand der Ventilbohrung in die Ringnut des Snap-in Ventils 2 eingreift.

Der Mechanismus 9 kann beispielsweise ein pneumatischer Antriebsmechanismus sein, der eine Zugkraft erzeugt, die auf das Kopplungsteil 6 wirkt. Der Mechanismus 9 kann beispielsweise auch ein elektrischer Antriebsmechanismus sein, der mit einem Elektromotor eine Zugkraft erzeugt, die auf das Kopplungsteil 6 wirkt. Im einfachsten Fall kann der Mechanismus 9 beispielsweise auch ein Hebelmechanismus sein.

Die zum Einziehen des Snap-in Ventils 2 erforderliche Zugkraft ist erheblich. Da das Snap-in Ventil 2 zunächst von Hand in die Ventilbohrung gesteckt wird, besteht grundsätzlich die Gefahr, dass bei der Montage des Snap-in Ventils 2 Finger eines Monteurs zwischen Snap-in Ventil 2 und Felge 1 eingeklemmt werden. Diese Gefahr lässt sich wesentlich reduzieren, indem das Werkzeug 4 mit einer Steuerung ausgestattet wird, die den Mechanismus 9, der die Zugkraft erzeugt, steuert, nämlich so steuert, dass nach mehreren Millimetern Bewegungsweg des Kopplungsteils 6 die auf das Kopplungsteil 6 ausgeübte Zugkraft erhöht, sodass das Snap-in Ventil 2 in einer Endphase seiner Einzugsbewegung in die Ventilbohrung mit einer erhöhten Geschwindigkeit bzw. erhöhten Kraft gezogen wird. Beispielsweise kann die Zugkraft nach mehreren Millimetern Bewegungsweg des Kopplungsteils, z.B. 2 mm oder mehr, auf das Zehnfache oder mehr erhöht werden. Auf diese Weise hat ein Monteur genug Zeit in einer Anfangsphase der Einzugsbewegung seine Finger aus dem Gefahrenbereich zu entfernen und es kann in der Endphase der Bewegung eine ausreichend hohe Kraft erzeugt werden, um das Snap-in Ventil 2 in seine montierte Position zu ziehen.

### Bezugszeichenliste

- 1: Felge
- 2: Snap-in Ventil
- 3: Reifendrucküberwachungseinrichtung
- 4: Werkzeug
- 5: Stützrohr
- 6: Kopplungsteil
- 8: Schutzkappe
- 9: Mechanismus

## Patentansprüche

1. Werkzeug zur Montage eines Snap-in Ventils (2) an einer Felge (1), mit
einem Kopplungsteil (6), um ein Snap-in Ventil (2) zu fassen, und
einem Mechanismus (9), um ein von dem Kopplungsteil (6) gefasstes Snap-in Ventil (2) soweit in eine Ventilbohrung der Felge (1) hineinzuziehen, dass ein Rand der Ventilbohrung in eine dafür vorgesehene Nut des Snap-in Ventils (2) schnappt,
**gekennzeichnet durch**,
ein Stützrohr (5) zum Abstützen an der Felge (1), welches das Kopplungsteil (6) umgibt und relativ zu welchem das Kopplungsteil (6) in Längsrichtung des Stützrohrs (5) beweglich ist.

2. Werkzeug nach Anspruch 1, **dadurch gekennzeichnet, dass** das Kopplungsteil (6) das Snap-in Ventil (2) an einer Schutzkappe (8) des Snap-in Ventils (2) fasst.

3. Werkzeug nach einem der vorstehenden Ansprüche, **dadurch gekennzeichnet, dass** der Mechanismus (9) ein pneumatischer Antriebsmechanismus ist.

4. Werkzeug nach einem der vorstehenden Ansprüche, **dadurch gekennzeichnet, dass** der Mechanismus (9) von einer Steuerungseinheit gesteuert wird, die nach mehreren Millimetern Bewegungsweg des Kopplungsteils (6) die auf das Kopplungsteil (6) ausgeübte Zugkraft erhöht, vorzugsweise um das Zehnfache oder mehr.

5. Werkzeug nach einem der vorstehenden Ansprüche, **dadurch gekennzeichnet, dass** das Stützrohr (5) einen unteren Teil, der bei Gebrauch des Werkzeugs in der Ventilbohrung ist, und einen oberen Teil, der bei Gebrauch des Werkzeugs außerhalb der Ventilbohrung ist, aufweist, wobei das Stützrohr (5) in dem oberen Teil einen größeren Außendurchmesser als in dem unteren Teil aufweist.

6. Werkzeug nach Anspruch 5, **dadurch gekennzeichnet, dass** das Stützrohr (5) in dem oberen Teil einen größeren Innendurchmesser als in dem unteren Teil hat.

7. Werkzeug nach einem der vorstehenden Ansprüche, **dadurch gekennzeichnet, dass** das Stützrohr (5) zum Einstecken in die Ventilbohrung der Felge (1) vorgesehen ist.
